# FASCICULE DE BREVET EUROPEEN

(11) **EP 1 996 029 B1**
(45) Date de publication et mention de la délivrance du brevet: **16.09.2015**
(21) Numéro de dépôt: 07731576.0
(22) Date de dépôt: 05.02.2007
(51) Int. Cl.: A23K 1/00, A23K 1/16, A23K 1/18

(54) **SUPPORT APPETENT A FORMULE AMELIOREE**
WOHLSCHMECKENDER TRÄGER MIT VERBESSERTER FORMEL
PALATABLE SUPPORT WITH AN IMPROVED FORMULA

(30) Priorité: 07.02.2006 FR 0601090
(43) Date de publication de la demande: 03.12.2008
(73) Titulaire: Vetinnov, 31520 Ramonville St Agne (FR)
(72) Inventeur: MALOISEL, Jean-Pierre, 31000 Toulouse (FR)
(74) Mandataire: Tanty, François
(86) Numéro de dépôt international: PCT/FR2007/050750
(87) Numéro de publication internationale: WO 2007/090987

(56) Documents cités:
- EP-A2- 0 320 320
- WO-A-02/47488
- WO-A-92/13465
- WO-A-2004/043427
- US-A1- 2001 036 464
- US-A1- 2005 079 264
- ANONYMOUS: "Liver Meal" INTERNET ARTICLE, [Online] 15 décembre 2004 (2004-12-15), XP002398211 Extrait de l'Internet: URL:http://www.bhj.dk/NR/rdonlyres/D2C5DFA A-B09D-45ED-AFDB-B5F7FA076EDE/0/DatasheetL ivermealHolland.pdf> [extrait le 2006-09-11]
- ANONYMOUS: "Product Information - Pet Savor Special Liquid" INTERNET ARTICLE, [Online] 2002, XP002398212 Extrait de l'Internet: URL:http://www.keminonline.com/pet-food/im ages/PetSavorSpecialLiquid.PDF> [extrait le 2006-09-11]
- LII, C; TSAI, M; TSENG, K: "Effect of Amylose Content on the Rheological Property of Rice Starch" CEREAL CHEMISTRY, vol. 73, no. 4, 1996, pages 415-420, XP002448983
- LIU, H; RAMSDEN, L; CORKE, H: "Physical Properties of Cross-linked and Acetylated Normal and Waxy Rice Stach" STARCH, vol. 51, no. 7, 1999, pages 249-252, XP002448984

## Description

L'invention concerne un support appétent permettant d'enrober une substance active destinée à un animal, en particulier pour les chiens, les chats, les chevaux, les porcs et les ruminants, ainsi que des procédés permettant la fabrication et l'utilisation dudit support.

L'administration aux animaux de substances actives par voie orale, en particulier de médicaments, est souvent difficile du fait du mauvais goût de certaines de ces substances et du sens très développé de l'odorat et du goût de ces animaux.

En cas de refus d'absorption, les chances de succès du traitement vétérinaire peuvent chuter dramatiquement.

Il existe donc un besoin pour un conditionnement des substances actives apte à déjouer la vigilance des animaux, en particulier des chiens, des chats, des chevaux, des porcs et des ruminants.

On connaît de EP 1 562 549 un support appétent pour une substance active destinée à un animal, notamment pour un médicament. La matrice dudit support comporte au moins une surface collante suffisamment adhésive pour fixer la substance active par simple contact de la substance active avec la surface collante. Il est suggéré d'utiliser une matrice « neutre », c'est-à-dire ne présentant sensiblement aucun goût, de manière qu'une même matrice puisse servir à différent types d'animaux. Cependant aucun mode de réalisation d'un tel support n'est décrit.

Il existe donc un besoin pour un support appétent, permettant d'envelopper une substance active, et convenant à différents types d'animaux, en particulier les chiens et les chats, ainsi qu'un procédé de fabrication dudit support.

Le but de la présente invention est de fournir un tel support.

Selon l'invention, on atteint ce but au moyen d'un support appétent destiné à enrober, au moins partiellement, une substance active initialement indépendante du support, remarquable en ce qu'il comporte en pourcentage massique, sur la base de la masse totale du support, de 3% à 50% de sirop de glucose, l'équivalent en dextrose (DE) du sirop de glucose étant compris entre 5 et 60, de préférence compris entre 5 et 40 et de préférence entre 5 et 15, et, au moins 5 % d'amidon de riz, de préférence hydrolysé et au moins 30% de protéines d'origine animale. De préférence, le pourcentage massique dudit amidon de riz est inférieur à 20 %, de préférence inférieur à 10 %, de préférence encore inférieur à 7 %.

Par « substance active initialement indépendante », il faut comprendre que le support tel que fabriqué ne contient pas la substance active. Par « substance active » il faut comprendre toute substance pouvant avoir un effet de soin, au sens médical et/ou cosmétique et/ou alimentaire, préparée par exemple, sous forme de comprimés, de tablettes, de gélules, de pilules, ou de poudres.

Comme on le verra plus en détail dans la suite de la description, l'utilisation d'un sirop de glucose avec un tel équivalent en dextrose et dans de telle quantité permet de fabriquer une matrice acceptée à la fois par les chats et les chiens.

De plus, la présence de l'amidon de riz rend collant le support. Avantageusement, la substance active y adhère donc efficacement. Associé au sirop de glucose, l'amidon de riz permet de constituer un support homogène, pâteux et collant, efficace pour faire ingérer des substances actives, à la fois par les chats et par les chiens.

Sauf indication contraire, tous les pourcentages sont des pourcentages massiques, sur la base de la masse totale du support.

De préférence, le support présente encore une ou plusieurs des caractéristiques optionnelles suivantes :
- Le support comporte un humectant, choisi parmi des alcools ou un mélange de ceux-ci, de préférence parmi le propylène glycol, le glycérol, le sorbitol ou un mélange de ceux-ci. Une quantité d'un mélange de propylène glycol et de glycérol supérieure ou égale à 3% et/ou inférieure ou égale à 15% est préférable, la quantité en propylène glycol étant de préférence supérieure ou égale à 3%, de préférence à 5%, et/ou inférieure ou égale à 15%, de préférence à 10%, la quantité en glycérol étant de préférence supérieure ou égale à 5%, de préférence à 9%, et/ou inférieure ou égale à 20%, de préférence à 15%. Une quantité de sorbitol supérieure ou égale à 3%, de préférence à 5%, et/ou inférieure ou égale à 15%, de préférence à 10%, est également préférable. De préférence encore, le support comporte une quantité de lécithine supérieure ou égale à 1%, de préférence à 3%, et/ou inférieure ou égale à 15%, de préférence à 8%.

Avantageusement, ces caractéristiques permettent d'obtenir une activité en eau (Aw) du support inférieure à 0,75 et une durée de conservation atteignant environ 18 mois.
- Le support comporte une quantité de protéines d'origine animale, choisies de préférence dans le groupe formé par les farines de volailles, de porc, de poisson et de leurs mélanges, de préférence inférieure ou égale à 90%, de préférence à 50%.
- Le support comporte une quantité d'amidon modifié, de préférence d'amidon de riz modifié, de préférence de l'AXFGP (AX Finest Grade Précuit) commercialisé par la société REMY Industries (Belgique) qui est de l'amidon de riz préalablement hydrolysé, de préférence inférieure ou égale à 90%, de préférence à 50%, de préférence encore à 20%.
- L'amidon de riz est cuit. De préférence il contient plus de 90 % en poids, de préférence plus de 95 % en poids d'amylopectine.
- De préférence, l'amidon de riz est cireux, c'est-à-dire qu'il ne contient sensiblement que de l'amylopectine. Par comparaison, un amidon « régulier » ne contient environ que 80 % d'amylopectine. Avantageusement, la teneur élevée en amylopectine confère un caractère très collant au support et permet de limiter sa teneur en glucose.
- Le support comporte une quantité de matières grasses, de préférence choisies parmi des huiles, des graisses, des émulsifiants ou un mélange de ceux-ci. Une quantité d'huile, de préférence choisies parmi les huiles végétales, en particulier les huiles de colza et/ou de tournesol, supérieure ou égale à 0,01%, de préférence à 1%, et/ou inférieure à 10%, de préférence à 5%, est souhaitable. Une quantité de graisse, de préférence d'origine animale, en particulier des graisses de canard et/ou de porc, supérieure ou égale à 0,01%, et/ou inférieure à 10%, de préférence à 2%, est souhaitable. Une quantité d'émulsifiant supérieure ou égale à 0,01%, et/ou inférieure à 10%, de préférence à 1%, est encore souhaitable, l'émulsifiant préféré étant le 2901 commercialisé par la société Brenntag N.V.
- Le support comporte des conservateurs, constitués de préférence de BHA (HydroxyAnisole butylé) et/ou de galate de propyle et/ou d'acide citrique et/ou d'acide lactique et/ou d'acide propénoïque et/ou d'acide sorbique et/ou d'acide phosphorique. Une quantité totale de conservateurs, supérieure ou égale à 0,01%, et/ou inférieure ou égale à 10%, de préférence à 3% est préférée. Les conservateurs préférés sont choisis parmi le Thermox™, le Pet SAVOR®, le sorbate ou un mélange de ceux-ci. Une quantité de Thermox™ supérieure ou égale à 0,01%, et/ou inférieure ou égale à 2%, de préférence à 1%, est souhaitable. Une quantité de Pet SAVOR®, supérieure ou égale à 0,5%, de préférence à 0,7%, et/ou inférieure à 5%, de préférence à 2%, est également souhaitable. Une quantité de sorbate, de préférence de sorbate de potassium, supérieure ou égale à 0,01%, de préférence à 0,1%, et/ou inférieure à 5% de préférence à 1,5%, est encore souhaitable.
- Le support comporte une quantité d'un exhausteur d'appétence, de préférence spécifique au type d'animal auquel est destiné le support et choisi parmi les produits de type Superpremium, de préférence à base de foie de porc, de préférence encore les exhausteurs 8P pour les chiens et 9P ou 9M pour les chats commercialisés par SDF Diana, supérieure ou égale à 1%, de préférence à 2% et/ou inférieure ou égale à 15%, de préférence à 10%, de préférence à 6%.
- Le pourcentage massique du sirop de glucose est supérieur à 5 % et/ou inférieur à 20 %, de préférence inférieur à 15 %, de préférence encore inférieur à 10 %, voire inférieur à 7 %, voire même à 6,5 %.
- L'équivalent en dextrose (DE) du sirop de glucose est supérieur à 10, de préférence supérieur à 15, de préférence même à 18 et/ou inférieur à 25, de préférence inférieur à 22.

L'invention concerne également un procédé de fabrication d'un support appétent destiné à faciliter l'ingestion, par un animal, d'une substance active, ce procédé comportant une étape dans laquelle on mélange différents constituants et étant remarquable en ce que lesdits constituants et leurs quantités sont déterminés de manière à obtenir un support selon l'invention.

L'invention concerne finalement un procédé de conditionnement d'une substance active au sein d'un support, ladite substance active étant initialement indépendante dudit support et de préférence sous forme de pilule, tablette, gélule, comprimé ou encore de poudre, dans lequel l'utilisateur enrobe au moins partiellement ladite substance active dans ledit support, ce procédé est remarquable en ce que le support est conforme à l'invention.

D'autres caractéristiques et avantages de la présente invention apparaîtront à la lecture de la description qui va suivre et à l'examen du dessin annexé dans lequel :
- la figure 1 représente une vue en coupe transversale d'un support selon l'invention,
- la figure 2 représente une vue en coupe transversale du support représenté sur la figure 1, après enrobage d'un comprimé par le support.

Sur les différentes figures, des références identiques ont été utilisées pour désigner des objets identiques ou analogues.

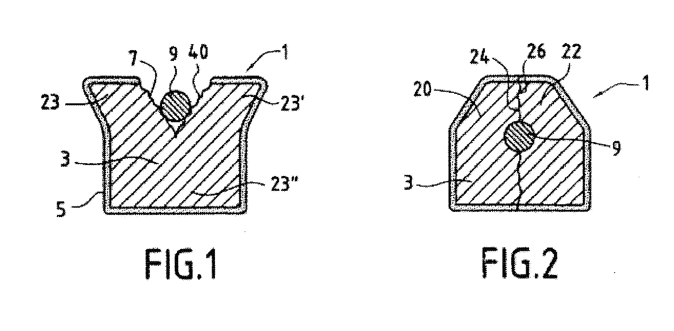

La figure 1 représente un support 1 comportant une matrice 3 recouverte au moins en partie d'une couche 5 en un matériau appétent ou « exhausteur d'appétence ». Le support 1 est fourni sous la forme d'un cube sensiblement homogène que l'utilisateur déchire en deux morceaux 20 et 22.

Sur la figure 1, le support 1 est représenté dans un état intermédiaire entre son état initial sensiblement cubique et son état déchiré en deux morceaux 20 et 22. La matrice 3 comporte, dans cet état intermédiaire, deux extrémités 23 et 23' reliées par une base commune 23". La matrice 3, une fois déchirée expose une surface de contact 27 formée des surfaces 29 et 28 des morceaux 20 et 22, respectivement, délimitant la déchirure.

Avantageusement, la couche 5 d'exhausteur d'appétence et la forme massive du cube protègent la matrice 3 du dessèchement. La durée de vie du support 1 en est augmentée.

La matrice 3 est de préférence une matière à déformation plastique, c'est-à-dire qu'elle conserve sensiblement la forme qui lui est donnée.

La composition de matrice 3 est comme décrite précédemment.

Une composition préférée entre toutes du support 1 est la suivante, avec en pourcentage massique, sur la base de la masse totale du support :
- entre 41,5% et 42,5% de farine de volailles, de préférence environ 41,9% ;
- entre 4% et 5% d'un exhausteur d'appétence, de préférence du type Superpremium commercialisé par SDF Diana, de préférence environ 4,5% ;
- entre 5,3% et 6,3% d'amidon de riz hydrolysé, de préférence du type AXFGP, de préférence environ 5,8% ;
- entre 0% et 1% de chlorure de sodium, de préférence environ 0,7% ;
- entre 0,01% et 1% de sorbate, de préférence environ 0,7% ;
- entre 0,01 % et 0,1% de Thermox™, de préférence environ 0,08% ;
- entre 11% et 12% de glycérol, de préférence environ 11,5% ;
- entre 7% et 8% de propylène glycol ou de sorbitol, de préférence environ 7,7% ;
- entre 5,5% et 6,5% de sirop de glucose avec un équivalent en dextrose (D.E.) compris entre 8 et 22, de préférence environ 5,8% de sirop de glucose avec un équivalent en dextrose (D.E.) d'environ 20 ;
- entre 2% et 3% d'huile, de préférence de tournesol et/ou de colza, de préférence environ 2,6% ;
- entre 0,01 % et 1% de graisses, de préférence de canard et/ou de porc, de préférence environ 0,6% ;
- entre 0,6 et 1,6% de Pet SAVOR®, de préférence environ 1,2% ;
- entre 5,2% et 6,2% de lécithine, de préférence de soja, de préférence environ 5,7% ;
- entre 10,3% et 11,3% d'eau, de préférence environ 10,8% ;
- entre 0,01 % et 1% d'émulsifiant, de préférence environ 0,4%.

De manière surprenante, cette matrice est bien acceptée à la fois par les chiens et par les chats. Elle est plastique et présente un caractère collant qui permet une agrégation des morceaux 20 et 22 par simple pression à la main. Le caractère collant permet la fixation du comprimé 9.

L'exhausteur d'appétence, de préférence le Superpremium™, peut être présente à la surface de la matrice 3 sous forme d'une couche 5 ou bien être contenu directement au sein de la matrice 3.

Un procédé préféré de fabrication d'un support selon l'invention comporte les différentes étapes suivantes :
a) mélange des constituants se présentant sous forme de poudres, en particulier du sirop de glucose lorsque celui-ci est sous forme de poudre (s'il est sous forme liquide il sera alors incorporé à l'étape b)), et/ou des protéines d'origine animale et/ou de l'amidon et/ou du sorbate et/ou du Thermox™ et/ou du sel, de façon à obtenir une poudre homogène,
b) mélange des composés liquides et/ou pâteux, en particulier d'un humectant et/ou des matières grasses, et/ou d'un conservateur et/ou de la lécithine et/ ou de l'eau, avec ladite poudre homogène,
c) repos à froid, dans des conditions bien connues de l'homme du métier pour faciliter le passage en machine, suivi d'une extrusion toujours à froid, en particulier au moyen d'un extrudeur mono vis de type « machine à pâtes » ou poussoir, de manière à obtenir une matrice,
d) optionnellement dépôt de l'exhausteur d'appétence sur cette matrice, de manière à former une couche continue ou, de préférence discontinue. Il existe dans ce dernier cas des zones de la matrice non couvertes par l'exhausteur de manière à permettre une manipulation du support sans contact des doigts avec l'exhausteur de goût. Ce dernier peut en effet dégager une odeur désagréable pour l'homme.

Le support obtenu peut alors être emballé, de préférence sous forme de cubes emballés individuellement, afin de limiter leur dessèchement et faciliter leur manipulation. Le support recouvert de l'exhausteur d'appétence peut être préalablement fendu, percé, ou rainuré de manière à prédéfinir les futures surfaces de contact avec la substance active. L'exhausteur d'appétence utilisé à l'étape d) est de préférence spécifique à l'animal auquel le support est destiné.

Cependant, selon l'invention, aux étapes a) et b), on choisit une proportion entre 3% et 50 % de syrop de glucose avec une DE comprise entre 5 et 60, de manière à obtenir en fin d'étape c) une matrice convenant à la fois aux chats et aux chiens. Les coûts de production en sont avantageusement réduits. L'exhausteur d'appétence peut être introduit pendant les étapes a) ou/et b), l'ensemble des autres constituants étant acceptés par les chats et les chiens, les coûts de fabrication restent avantageusement réduits. On notera également que le procédé de fabrication du support selon l'invention permet de s'affranchir de toute étape de cuisson lors de la fabrication. De préférence, le procédé de fabrication selon l'invention ne contient pas d'étape de cuisson entre les étapes a) et d) incluses.

Les différentes étapes ainsi que l'ordre dans lequel elles sont décrites sont fournis à titre d'exemple illustratif et non limitatif. En particulier, on peut imaginer que les étapes a) et b) soient inversées. De même on peut très bien imaginer que l'exhausteur d'appétence soit introduit au sein de la matrice au cours d'une des étapes a) ou b).

Pour conditionner un comprimé 9 au moyen d'un support selon l'invention tel que celui représenté sur la figure 1, un utilisateur peut procéder de la manière suivante.

L'utilisateur déchire le support 1 en deux morceaux 20 et 22. En ouvrant la matrice, l'utilisateur expose les surfaces 28 et 29.

Il positionne ensuite le comprimé 9 sur une des surfaces 28 et 29, et dispose les morceaux 20 et 22 du support 1 déchiré de manière que les surfaces 28 et 29 soient sensiblement l'une en face de l'autre. Il exerce alors une action de manière à presser l'un contre l'autre ces morceaux de façon à les agréger. Il est aussi possible de déformer la matrice à la main pour augmenter la surface de contact entre le comprimé 9 et les surfaces de contact 28 et 29.

De préférence, la surface de contact couvre sensiblement toute la surface extérieure du comprimé 9 de manière à englober ce dernier.

Les surfaces 28 et 29 du support selon l'invention sont telles qu'après qu'elles ont été pressées l'une contre l'autre, elles ne se détachent plus spontanément l'une de l'autre. Par « spontanément », on entend « sous le seul effet de l'élasticité de la matrice », c'est-à-dire sans intervention de l'utilisateur.

De préférence, la déchirure est suffisamment large pour permettre l'insertion complète du comprimé 9. Avantageusement, le support 1 selon l'invention permet ainsi d'encapsuler, d'enrober ou d'englober totalement le comprimé 9 après reconstitution du cube initial. Aucune odeur répulsive ou aucun goût désagréable ne peut donc plus se dégager du comprimé 9 inséré dans le support 1.

Comme cela apparaît clairement, le conditionnement d'une substance active au moyen d'un support selon l'invention est très simple et peut être mis en oeuvre extemporanément, à l'unité, par le particulier lui-même. Il ne nécessite aucun appareillage.

Avantageusement, le même procédé de conditionnement et les mêmes supports 1 peuvent être utilisés pour des substances actives de formes très différentes.

Avantageusement, l'utilisateur peut conditionner plusieurs substances actives, se présentant éventuellement sous des formes différentes (gélule, comprimé, tablette, poudre etc.) au moyen d'un même support 1.

L'efficacité d'un support selon l'invention à déjouer la vigilance des animaux a été testée pour des chiens et des chats. Les supports testés ont la composition suivante :
- entre 41 % et 42% de farine de volailles ;
- entre 4,5% d'exhausteur d'appétence de type Superpremium;
- environ 5,8% d'AXFGP ;
- environ 0,64% de chlorure de sodium ;
- environ 0,64% de sorbate ;
- environ 0,07% de Thermox™ ;
- environ 11,5% de glycérol ;
- environ 7,67% de propylène glycol ;
- entre 5,7% et 5,85% de sirop de glucose avec un équivalent en dextrose (D.E.) de 20 ;
- environ 2,57% d'un mélange d'huile, de graisses et de l'émulsifiant 2901 de Brenntag ;
- environ 1,24% de Pet SAVOR® ;
- environ 5,76% de lécithine de soja ;
- environ 10,8% d'eau ;

L'exhausteur d'appétence est non seulement inclus dans le mélange des poudres mais aussi déposé à l'extérieur de la matrice 3 de façon à former une couche 5 autour du support 1. Le support est alors non collant, y compris après déchirement en plusieurs morceaux. En outre, la périphérie du support est particulièrement appétente, ce qui est particulièrement avantageux quand l'animal vient renifler le support.

Les tests sont menés dans les mêmes conditions pour les chiens et pour les chats. On présente deux fois par jour pendant 5 jours à l'animal un comprimé enrobé dans le support. A chaque prise, l'animal peut soit ne manger ni le support ni le comprimé, soit manger le support mais recracher le comprimé soit manger le support et le comprimé.

Par la suite, les « échecs du support » représentent le pourcentage des cas où le support est mangé mais le comprimé recraché, de manière similaire l'efficacité correspond au pourcentage de cas où le support et le comprimé sont mangés. Les résultats des tests sont résumés dans le tableau 1 suivant :

**TABLEAU 1**

| | % pour un chien | % pour un chat |
|---|---|---|
| Echecs du support | 2,5 % | 9,5 % |
| Efficacité | 90 % | 80 % |

Comme on peut le constater, l'invention fournit un support très efficace, à la fois pour les chiens et pour les chats.

Bien entendu la présente invention n'est pas limitée au mode de réalisation décrit et représenté fourni à titre d'exemple illustratif et non limitatif. En particulier la forme et la taille de la matrice, la présence et la nature de l'exhausteur d'appétence, la présence d'une fente, d'une rainure, d'une incision, d'un trou, ou d'une saignée sont optionnelles.

## Revendications

1. Support appétent destiné à enrober, au moins partiellement, une substance active initialement indépendante du support et destiné à un chat ou un chien, **caractérisé en ce qu'**il comporte en pourcentages massiques, sur la base de la masse totale du support, de 3 % à 50 % de sirop de glucose, l'équivalent en dextrose (DE) du sirop de glucose étant compris entre 5 et 60, au moins 5 % d'amidon de riz, et au moins 30 % de protéines d'origine animale.

2. Support selon la revendication 1, l'équivalent en dextrose étant compris entre 15 et 25.

3. Support selon la revendication 1 ou la revendication 2, **caractérisé en ce que** le pourcentage massique sur la base de la masse totale du support, du sirop de glucose est supérieur à 5 % et inférieur à 10 %.

4. Support selon l'une quelconque des revendications précédentes, l'équivalent en dextrose étant supérieur à 18 et inférieur à 22.

5. Support selon l'une quelconque des revendications précédentes, **caractérisé en ce qu'**il comporte un humectant, choisi parmi des alcools ou un mélange de ceux-ci.

6. Support selon l'une quelconque des revendications précédentes, **caractérisé en ce qu'**il comporte en pourcentage massique, sur la base de la masse totale du support, de 3 % à 15 % de sorbitol.

7. Support selon l'une quelconque des revendications précédentes, **caractérisé en ce qu'**il comporte en pourcentage massique sur la base de la masse totale du support :
- entre 3 % et 15 % d'un mélange de propylène glycol et de glycérol, les teneurs en propylène glycol et en glycérol étant comprises entre 3 % et 15 % et 5 % à 20 % respectivement,
- entre 1 % et 15 % de lécithine,
- moins de 15 % d'un exhausteur d'appétence.

8. Support selon l'une quelconque des revendications précédentes, **caractérisé en ce qu'**il comporte en pourcentage massique sur la base de la masse totale du support :
- au plus 90 % de protéine d'origine animale,
- au plus 90 % d'amidon,
- de moins de 10 % de matières grasses,
- de 0,01 % à 10 % d'au moins un conservateur.

9. Support selon l'une quelconque des revendications précédentes, **caractérisé en ce qu'**il comporte des protéines d'origine animale choisies dans le groupe formé par les farines de volailles, de porc, de poisson et de leurs mélanges et/ou de l'amidon de riz.

10. Support selon l'une quelconque des revendications précédentes, dans lequel l'amidon de riz est préalablement hydrolysé.

11. Support selon l'une quelconque des revendications précédentes, dans lequel l'amidon de riz comporte plus de 90% en poids d'amylopectine.

12. Support selon la revendication précédente, dans lequel l'amidon de riz est cireux.

13. Procédé de conditionnement d'une substance active au sein d'un support appétent, ladite substance active, destinée à un animal, étant initialement indépendante dudit support, ladite substance active étant sous forme de pilules, tablettes, gélules, comprimés ou encore de poudre, dans lequel l'utilisateur enrobe au moins partiellement ladite substance active dans ledit support, **caractérisé en ce que** le support appétent est conforme à l'une quelconque des revendications précédentes.

## Patentansprüche

1. Essbarer Träger, dazu ausgelegt, zumindest teilweise einen anfänglich vom Träger unabhängigen aktiven Wirkstoff zu ummanteln, und für eine Katze oder einen Hund ausgelegt, **gekennzeichnet dadurch, dass** er in massenbezogenen Prozentanteilen bezüglich der Basis der Gesamtmasse des Trägers 3% bis 50% Glukosesirup, wobei das Dextroseäquivalent (DE) des Glukosesirups zwischen 5 und 60 liegt, mindestens 5% Reisstärke und mindestens 30% Proteine tierischen Ursprungs umfasst.

2. Träger nach Anspruch 1, wobei das Dextroseäquivalent zwischen 15 und 25 liegt.

3. Träger nach Anspruch 1 oder Anspruch 2, **gekennzeichnet dadurch, dass** der massenbezogene Prozentanteil bezüglich der Basis der Gesamtmasse des Trägers des Glukosesirups oberhalb von 5% und unterhalb von 10% liegt.

4. Träger nach einem der vorhergehenden Ansprüche, wobei das Dextroseäquivalent oberhalb von 18 und unterhalb von 22 liegt.

5. Träger nach einem der vorhergehenden Ansprüche, **gekennzeichnet dadurch, dass** er ein Feuchthaltemittel, ausgewählt aus Alkoholen oder einer Mischung von diesen, umfasst.

6. Träger nach einem der vorhergehenden Ansprüche, **gekennzeichnet dadurch, dass** er 3% bis 15% Sorbit als massenbezogenen Prozentanteil bezüglich der Basis der Gesamtmasse des Trägers umfasst.

7. Träger nach einem der vorhergehenden Ansprüche, **gekennzeichnet dadurch, dass** er als massenbezogenen Prozentanteil bezüglich der Basis der Gesamtmasse des Trägers umfasst:
- zwischen 3% und 15% einer Mischung von Propylenglykol und von Glyzerin, wobei die Inhalte von Propylenglykol und von Glyzerin jeweils zwischen 3% und 15% und bei 5% bis 20% liegen,
- zwischen 1% und 15% Lezithin,
- weniger als 15% eines Geschmacksverstärkers.

8. Träger nach einem der vorhergehenden Ansprüche, **gekennzeichnet dadurch, dass** er in massenbezogenen Prozentanteilen bezüglich der Basis der Gesamtmasse des Trägers umfasst:
- höchstens 90% Proteine tierischen Ursprungs,
- höchstens 90% Stärke,
- weniger als 10% Fette,
- 0,01% bis 10% mindestens eines Konservierungsmittels.

9. Träger nach einem der vorhergehenden Ansprüche, **gekennzeichnet dadurch, dass** er Proteine tierischen Ursprungs umfasst, die aus der Gruppe ausgewählt sind, die gebildet wird durch Mehle von Geflügel, Schwein, Fisch und ihren Mischungen und/oder von Reisstärke.

10. Träger nach einem der vorhergehenden Ansprüche, bei dem die Reisstärke zuvor hydrolisiert ist.

11. Träger nach einem der vorhergehenden Ansprüche, bei dem die Reisstärke gewichtsmäßig mehr als 90% Amylopektin aufweist.

12. Träger nach dem vorhergehenden Anspruch, bei dem die Reisstärke wächsern ist.

13. Verfahren zur Aufbereitung eines aktiven Wirkstoffs innerhalb eines essbaren Trägers, wobei der aktive Wirkstoff, ausgelegt für ein Tier, anfänglich unabhängig vom Träger ist, wobei der aktive Wirkstoff in Form von Pillen, Tabletten, Kapseln, Presstabletten oder auch als Pulver vorliegt, bei dem der Benutzer den aktiven Wirkstoff zumindest teilweise innerhalb des Trägers ummantelt, **gekennzeichnet dadurch, dass** der essbare Träger gemäß einem der vorhergehenden Ansprüche ausgestaltet ist.

## Claims

1. A palatable support intended to at least partially wrap an active substance that is initially independent of the support, and intended for a cat or a dog, **characterized in that** it includes, as a percentage by weight based on the total weight of the support, 3% to 50% of glucose syrup, the dextrose equivalent (DE) of the glucose syrup being in the range 5 to 60, at least 5% of rice starch, and at least 30% of protein of animal origin.

2. A support according to claim 1, wherein the dextrose equivalent is comprised between 15 and 25.

3. A support according to claim 1 or claim 2, **characterized in that** the percentage by weight of glucose syrup, based on the total weight of the support, is more than 5% and less than 10%.

4. A support according to any preceding claim, wherein the dextrose equivalent is more than 18 and less than 22.

5. A support according to any preceding claim, **characterized in that** it includes a moistening agent selected from alcohols or a mixture thereof.

6. A support according to any preceding claim, **characterized in that** it includes, as a percentage by weight based on the total weight of the support, 3% to 15% of sorbitol.

7. A support according to any preceding claim, **characterized in that** it includes, as a percentage by weight based on the total weight of the support:
- in the range 3% to 15% of a mixture of propylene glycol and glycerol, the quantities of propylene glycol and glycerol being in the range 3% to 15% and in the range 5% to 20% respectively;
- in the range 1% to 15% of lecithin;
- less than 15% of a palatability enhancer.

8. A support according to any preceding claim, **characterized in that** it includes, as a percentage by weight based on the total weight of the support:
- 90% or less of protein of animal origin;
- 90% or less of starch;
- less than 10% of fats;
- 0.01% to 10% of at least one preservative.

9. A support according to any preceding claim, **characterized in that** it comprises proteins of animal origin selected from the group formed by poultry, pig and fish meal and mixtures thereof and/or rice starch.

10. A support according to any preceding claim, in which the rice starch is pre-hydrolyzed.

11. A support according to any preceding claim, in which the rice starch comprises more than 90% by weight of amylopectin.

12. A support according to the preceding claim, in which the rice starch is waxy.

13. A method of packaging an active substance within a palatable support, said active substance, intended for an animal, initially being independent of said support, said active substance being in the form of pills, lozenges, gelules, tablets, or powder, in which the user at least partially wraps said active substance in said support, **characterized in that** the palatable support is in accordance with any one of preceding claims.
